# EUROPEAN PATENT SPECIFICATION

(11) **EP 1 608 541 B1**
(45) Date of publication and mention of the grant of the patent: **27.09.2006**
(21) Application number: 04725684.7
(22) Date of filing: 05.04.2004
(51) Int. Cl.: B60T 7/10

(54) **PARKING BRAKE LEVER UNIT**
FESTSTELLBREMSHEBEL
UNIT DE LEVIER DE FREIN MAIN

(30) Priority: 03.04.2003 DE 10315233
(43) Date of publication of application: 28.12.2005
(73) Proprietor: FICO CABLES, S.A., 08100 Mollet del Vallès (ES)
(72) Inventor: BARRIOS VILLÁ , Josep, E-08233 Vacarisses (ES); TERRADAS PRAT, Jaume, E-08025 Barcelona (ES); SANCHEZ REVILLA, Eduardo, E-08026 Sabadell (ES); GRAS, David, Alonso, E-08190 Sant Cugat del Vallés (ES); PARDO ALOY, David, E-08193 Bellaterra (ES); JORNET VIDAL, Jordi, E-08224 Terrassa (ES)
(74) Representative: Hess, Peter K. G.
(86) International application number: PCT/EP2004/003592
(87) International publication number: WO 2004/087476

(56) References cited:
- EP-A- 0 251 149
- EP-A- 0 499 494
- EP-A- 0 933 270
- DE-A- 4 321 610
- GB-A- 1 237 205
- US-A- 5 950 496

## Description

### 1. Technical field

The present invention relates to a parking brake lever unit for the actuation of a parking brake within a motor vehicle.

### 2. Prior art

In the automotive engineering there is the tendency to use plastic parts for weight and cost reduction. These are easily producible by injection molding can almost arbitrarily be formed and thereby produced in the design of the vehicle.

In the area of parking brakes these tendencies are also detectable. So, the EP 0 499 494 A1 shows a parking brake lever unit which comprises of a plastic hand lever which is connected to a cassette housing. Within this cassette housing made of metal the actual functional components of the parking brake lever unit are contained. The hand lever made of a plastic material contributes to the weight reduction of the complete parking brake lever unit.

From the EP 0 933 270 A1 a parking brake lever is known, which additionally to the plastic grip area also comprises a back area, which is also made of a plastic material and is integrally produced with the grip area. This plastic brake lever also comprises elements for fixing and guiding of the brake cable.

Finally from the EP 0 251 149 A2 a parking brake lever unit is known, wherein the brake lever and also the support comprises of a plastic material. This parking brake lever further comprises a crown teeth for locking the parking brake lever.

Although these above mentioned parking brake levers and parking brake lever units are an enhancement compared to conventional parking brake levers made of sheet metal, there is however the need for further improvements. So, a parking brake lever unit from plastic material should be easily and cost efficiently producible. Further at least the same stability as a conventional parking brake lever of sheet metal should be reached to provide a safe actuation. Additionally, it is desirable to further increase the reliability and durability of the parking brake lever unit and it is desirable to make the surface appearance and the design of the parking brake lever unit adaptable to the interior design of the vehicle. Further, there is the need to provide a possibly simple construction of the parking brake lever unit with possibly less components.

### 3. Summary of the invention

The above mentioned problems are solved by a parking brake lever unit according to patent claim 1. In particular these problems are solved by a parking brake lever unit for the use in a motor vehicle, comprising a parking brake lever made of plastic material, a support made of plastic material, at which the parking brake lever is pivotably supported and a locking unit, comprising a pawl, which is mounted at the parking brake lever, and a ratchet insert, wherein the ratchet insert comprises of a metal and is over molded within the support.

Therefore, the parking brake lever unit essentially comprises of a plastic material and comprises with respect to weight and production many advantages and ensures by the metallic ratchet insert, which is injection molded into the support a reliable and secure operation. Further, the ratchet insert must not be mounted at the plastic support of the parking brake lever unit in an additional production step. This further contributes to a cost reduction. Also the security of the parking brake lever unit is thereby decisively improved, since the ratchet insert will not loosen or even released during operation.

Preferably, the ratchet insert comprises locking teeth and is integrated into the support, so that substantially only the locking teeth are exposed. Thereby, a particularly fixed connection of the ratchet insert within the injection molded support is achieved. It is also preferred, that the ratchet insert comprises mounting holes, which are filled with plastic during injection molding of the support. So, the fixed anchoring of the ratchet insert is further improved.

In a further preferred embodiment of the parking brake lever unit the pawl comprises of a metal or a plastic material. If the pawl, which mates with the ratchet insert, comprises of a metal it is particularly resistant with respect to wear out. If it comprises of a plastic material, the actuation sound is quiet, since metal mates with plastic material.

In a further preferred embodiment the parking brake lever is pivotably supported by means of a shaft within the support, wherein the shaft comprises of a plastic material. So, a further cost and weight reduction results. Preferably, the shaft is a self-locking shaft, which comprises integrated latching elements, so that it can be mounted within the support without additional mounting elements. The shaft can so be mounted easily and fast and additional mounting elements are spared.

In a further embodiment of the present invention the parking brake lever comprises an over molded grip at its grip area of a plastic material. So the production step to attach an additional grip covering does not apply.

In a preferred embodiment the parking brake lever and/or the support and/or the shaft comprises of a technical plastic material, which comprises self-lubricating characteristics, so that no additional lubricants or special bearings or bearing halves must be used. Preferably the plastic materials comprises additives for achieving the self-lubricating characteristics.

In another preferred embodiment the parking brake lever and/or the support comprise bearing bushings or bearing halves of a metal or plastic material, wherein the material of the bearing bushings or bearing halves comprises self-lubricating characteristics.

In a further preferred embodiment the support comprises a stiff plate, which is ripped at its underside. Preferably, this plate is essentially plain. With this plate the parking brake lever unit is connected to the vehicle, preferably the plate thereto comprises metallic mounting inserts. The parking brake lever unit is connected to the vehicle at these mounting inserts.

In a further preferred embodiment the support comprises an integrated latching element for the mounting of the parking brake lever unit at the vehicle. So the number of the additionally required mounting elements for example screws or rivets is decreased.

In a further preferred embodiment the support comprises an electrical switch, which can be actuated by the parking brake lever. This electrical switch signalizes the actuation of the parking brake to the board electronics.

### 4. Short description of the drawing

In the following the preferred embodiments of the present invention are described with relation to the drawings.
- Fig. 1:: A preferred embodiment of a parking brake lever unit according to the invention in an assembled condition in a three-dimensional view;
- Fig. 2:: The parking brake lever unit from Fig. 1 in a three-dimensional view from its underside;
- Fig. 3:: The parking brake lever unit from Fig. 1, wherein the parking brake lever is not shown for the illustration of the inner elements of the parking brake lever unit;

- Fig. 4:: A single piece injection molded parking brake lever in a three-dimensional view;
- Fig. 5:: A preferred embodiment of a support according to the invention in a partially sectional view;
- Fig.6:: A further preferred embodiment of a parking brake lever unit according to the invention in a three-dimensional view.

### 5. Detailed description of the preferred embodiments

The preferred embodiments of a parking brake lever unit according to the invention are explained in the following with respect to the drawings.

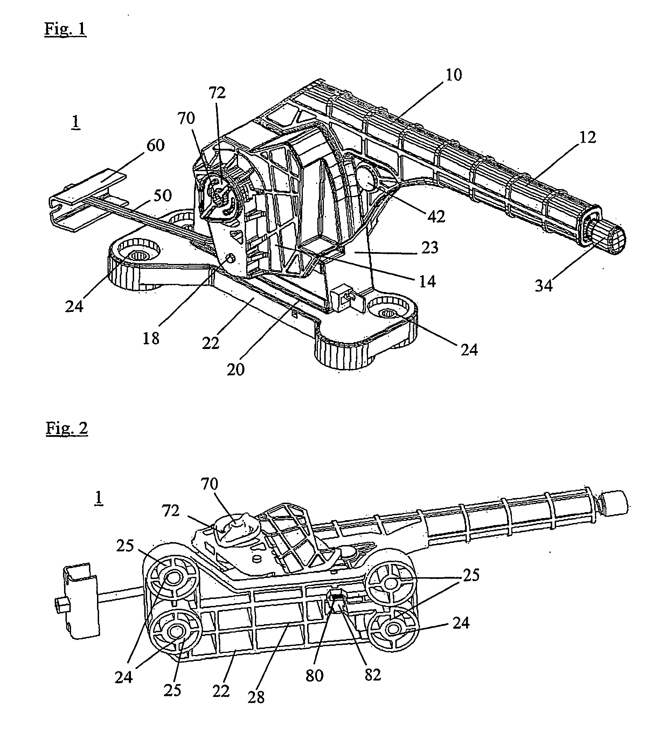

Figure 1 shows a parking brake lever unit 1 according to the invention in an assembled condition. A preferably single piece parking brake lever 10 of a plastic material is pivotably connected at a preferably single piece injection molded support 20 by means of a shaft 70. Parking brake lever 10 as well as support 20 can also comprise of a plurality of plastic parts, which are connected to each other.

By means of a connection point 18 a connection rod 50 is connected to the parking brake lever 10. The connection rod 50 comprises at one end a lug, by which it is pivotably connected to the parking brake lever 10 at the connection point 18. At the other end, the connection rod 50 it is connected to a cable balance 60. At this cable balance 60 at least two brake cables (not shown) are connected, which actuate the brakes. Thereby, the cable balance 60 acts for the balancing of the forces between the at least two connected brakes.

The support 20 comprises of an essentially vertically arranged support portion 23 for the support of the parking brake lever 10, as well as of an essentially horizontal plate 22, which acts for the mounting of the parking brake lever unit at the vehicle.

In the shown embodiment the plate 22 is ribbed at its underside, wherein the ribs 28 are shown in Figure 2. By these arrangements of ribs, the stability of the plate 22 and thereby the support 20 is increased. At the four corners of plate 22 the connection points 25 of the parking brake lever unit are shown, wherein in these embodiments only the two back and the left front mounting point 25 are required for the assembly. The possible right front connecting point 25 is not used. Other configurations according to the vehicle are of course possible. For an increase of the stability and reliability metallic mounting inserts 24 can be pressed or injection molded into the connecting points 25. The mounting inserts 24 can be simple metallic bushings or may comprise inner threads. Thereby, the parking brake lever unit can be mounted to a correspondingly formed receptacle in the vehicle by simple screws.

The pivotably support of the parking brake lever 10 and the support 20 is done by a shaft 70. The shaft 70 runs transverse through the parking brake lever 10 and through the support portion 23 of the support 20. In the shown embodiment for weight reduction the shaft 70 is also produced of a plastic material and provided as a self-locking shaft 70. It preferably comprises thereto latching elements at its head end 72, which latch with a corresponding receptacle in the parking brake lever 10. The latching elements can be provided as hooks or extending clips. So, additional securing elements of the shaft 70 do not apply.

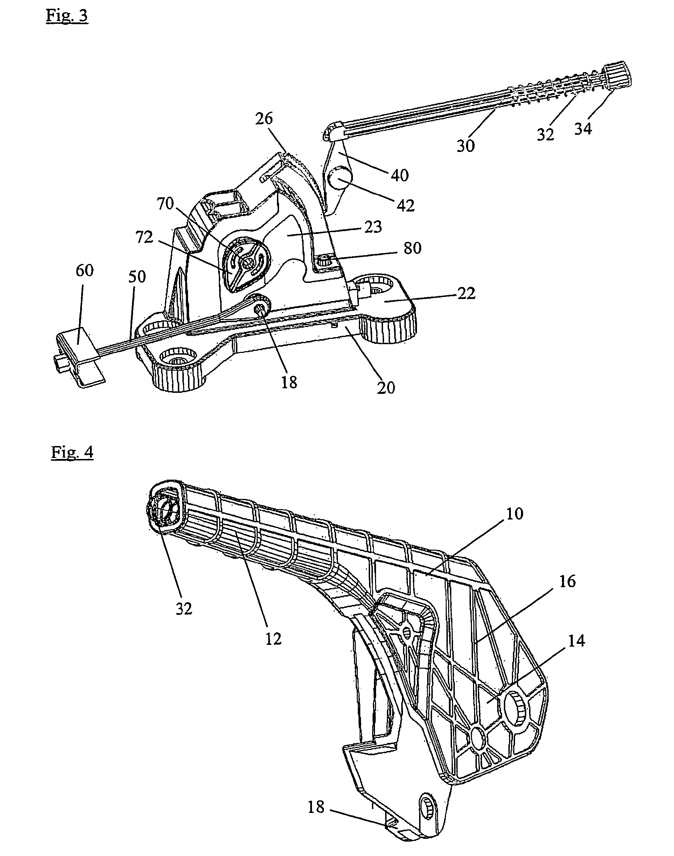

In Fig. 3 the elements are shown, which form the locking device of the parking brake lever unit 1. The actual locking device 40, 26 of the parking brake lever unit 1 is formed by a metallic ratchet insert 26 and a corresponding pawl 40. The ratchet insert 26 is according to the invention injection molded into the support area 23 of the support 20. Only the teeth area 27 of the ratchet insert 26 extends from the support 20. The pawl 40 is pivotably supported at the parking brake lever 10 via a rotation point 42. The pawl 40 comprises two arms, wherein it latches with the end of one arm with the ratchet insert 26 and is connected to the end of the other arm with a push rod 30. The push rod 30 runs within the tube shaped grip area 12 of the parking brake lever 10 and acts for the actuation of the pawl 40. Thereto, the push rod 30 ends at a push knob 34 which is actuatable by the user.

The locking device 26, 40 acts for the fixing of the parking brake lever 10 in the braking position. For tightening, that means for actuation of the parking brake, the parking brake lever 10 is pivoted to the top by the user. Thereby, the brake cables, which are connected thereto via the connection rod 50 and the cable balance 60, are tightened and the brakes become active. For maintaining the brake action the parking brake lever 10 must be fixed in this brake position, so that the tension on the brake cables is maintained. Thereby, the pawl 40 latches with the teeth of the ratchet insert 26 during the actuation of the parking brake lever 10. The ratchet insert 26 is provided with a plurality of teeth 27, so that the pawl 40 can latch at an arbitrary position. The parking brake lever 10 can so be fixed at an arbitrary position.

For releasing the fixing of the parking brake lever 10, that means for releasing the brake action, the user actuates the push knob 34 at the end of the grip area 12. By a pressure onto the push knob 34 the push rod 30 is displaced into the hollow grip range 12 against a force, which is applied by a spring 32. Thereby, the pawl 40 which is connected to the push rod 30 is actuated, which pivots around its rotation point 42. Thereby, the pawl 40 is brought out of engagement with the ratchet insert 26. So, the locking action of the locking device 40, 26 is released and the parking brake lever 10 can again be pivoted down, whereby the braking cables, which are connected thereto, are again released.

In Figure 4 the parking brake lever 10 is shown from another perspective. The parking brake lever 10 at one end comprises the already mentioned tube-like grip area 12, and an essentially U-shaped end portion 14, which surrounds the support portion 23 of the support 20 in mounted condition. For improving the stability, the U-shaped end portion 14 can comprise ribs 16. At the lower area of the U-shaped end portion 14 the already mentioned connection point 18 for the connection rod 50 is shown. Here, this connection point 18 is also provided as a U-shaped area, so that the end of the connection rod 50, which is provided with a lug can be connected to the parking brake lever 10 by means of a pin.

The parking brake lever 10 as well as the support 20 are preferably injection molded of a plastic material as a single piece. It is also thinkable, that the support 20 as well as also the parking brake lever 10 are produced from a plurality of plastic parts and to latch, to glue, to screw or to rivet these parts with each other.

At the grip area 12 of the parking brake lever 10 a grip of a thermoplastic elastomer or an other arbitrary plastic or rubber material can be over molded. The parking brake lever 10 then comprises a pleasant soft grip for the actuation. The otherwise required production step to attach an additional grip to cover the parking brake lever 10 does not apply.

The shaft 70 is preferably injection molded of a plastic material. Preferably a technical plastic material is used as material for the parking brake lever 10 and/or the support 20 and/or the shaft 70, which comprises self-lubricating characteristics. These self-lubricating characteristics can be created by additives (for example PTFE), which are added to the raw material before injection molding. Thereby, additional lubricants, as fats or oils or special bearings or bearing halves can be abandoned. The preferred plastic material is polyamide (PA 6.6) or polypropylene (PP). Also glass fiber reinforced plastic materials can be used.

To the opposite it is also possible to provide such bearings or bearing halves at the parking brake lever unit 1. Then, preferably these bearings or bearing halves (not shown) comprise of the explained self-lubricating plastic material or a metal.

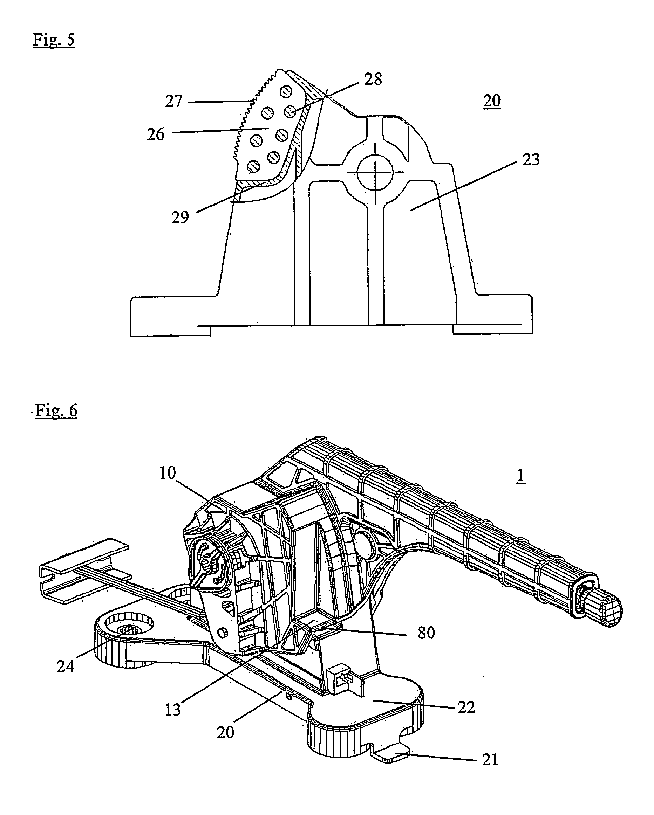

Figure 5 shows the support 20 in a partially sectional view. The ratchet insert 26 is connected to the support portion 23 of the support 20 by injection molding. The ratchet insert 26 is almost completely covered by the plastic material, only the teeth area 27 extends from the support portion 23. For a safe connection the ratchet insert 26 comprise mounting holes 28, which are filled with plastic material during injection molding. From the backside the ratchet insert 26 is covered by a wall portion 29. So, a safe and reliable anchoring of the ratchet insert 26 is ensured and it cannot be undesirably released. Further, by this over-molding of the ratchet insert 26 no further assembly step is required.

In Figure 6 a further embodiment of the parking brake lever 1 is shown. At one end of the plate 22 of the support 20 a latching element 21 is provided. Here in the form of a flap, which can engage a recess in the car body (not shown). The parking brake lever unit is then connected to the car body by insertion and subsequent screwing. The insertion can be done very fast and mounting means are saved. The latching element 21 can also comprise another geometry than a flap, for example as a pin, hook, clip or other extension.

In a further embodiment the support 20 is provided with an electrical switch 80, which signalizes the actuation of the parking brake. As shown in Figs. 2, 3 and 6 the switch 80 is vertically mounted in the inside of the support 20 and its actuation pin extends from the support portion 23 to the top. In the unactuated condition of the parking brake the actuation pin of the switch 80 is pushed down by the actuation area 13 of the parking brake lever 10. At an actuation of the parking brake the actuation pin of the switch 80 is released and the switch 80 signalizes the actuation to a board electronics which is connected thereon. In Fig. 2 the connector 82 of the switch 80 is shown, which is advantageously inserted into plate 22 to the bottom. The switch 80 can be a common mechanical push button or a reed contact or a hall sensor.

### List of reference signs

- 1: Parking brake lever unit
- 10: Parking brake lever
- 12: Grip area
- 13: Actuation area
- 14: U-shaped end portion
- 16: Reinforcement rips
- 18: Connection point
- 20: Support
- 21: Latching element
- 22: Plate
- 23: Support portion
- 24: Mounting inserts
- 25: Mounting point
- 26: Ratchet insert
- 27: Tooth area
- 28: Mounting holes
- 29: Wall portion
- 30: Push rod
- 32: Spring
- 34: Push knob
- 40: Pawl
- 42: Rotation point
- 50: Connection rod
- 60: Cable balance
- 80: Switch
- 82: Connector

## Claims

1. Parking brake lever unit (1) for the use in a motor vehicle comprising
a. a parking brake lever (10) of a plastic material;
b. a support (20) of a plastic material, at which the parking brake lever (10) is pivotably supported;
c. a locking unit (40, 26), comprising a pawl (40), which is mounted at the parking brake lever (10), and a ratchet insert (26); wherein
d. the ratchet insert (26) comprises of a metal and is over-molded within the support (20).

2. Parking brake lever unit according to claim 1, wherein the ratchet insert (26) comprises locking teeth (27) and wherein the ratchet insert (26) is integrated into the support (20), so that substantially only the locking teeth (27) are exposed.

3. Parking brake lever unit according to one of the claims 1 or 2, wherein the ratchet insert (26) comprises mounting holes (28), which are filled with plastic material during injection molding of the support (20).

4. Parking brake lever unit according to one of the claims 1 - 3, wherein the pawl (40) comprises of a metal or a plastic material.

5. Parking brake lever unit according to on of the claims 1 - 4, wherein the parking brake lever (10) is pivotably supported by means of a shaft (70) within the support (20), wherein the shaft (70) comprises of a plastic material.

6. Parking brake lever unit according to claim 5, wherein the shaft (70) is a self locking shaft, which comprises integrated latching elements, so that it can be mounted within the support (20) without additional mounting elements.

7. Parking brake lever unit according to one of the claims 1 to 6, wherein the parking brake lever (10) comprises an over-molded grip at its grip area (12) of a plastic material.

8. Parking brake lever unit according to one of the claims 1 to 7, wherein the parking brake lever (10) and/or the support (20) and/or the shaft (70) comprises of a technical plastic material, which comprises self-lubricating characteristics, so that no additional lubricants or special bearings or bearing halves must be used.

9. Parking brake lever unit according to claim 8, wherein the plastic material comprises additives for achieving the self-lubricating characteristics.

10. Parking brake lever unit according to one of the claims 1 to 7, wherein the parking brake lever (10) and/or the support (20) comprise bearing bushings or bearing halves of a metal or plastic material, wherein the material of the bearing bushings or bearing halves comprises self-lubricating characteristics.

11. Parking brake lever unit according to one of the claims 1 to 10, wherein the support (20) comprises a stiff plate (22), which is ripped at its underside.

12. Parking brake lever unit according to one of the claims 1 to 11, wherein the support (20) comprises an essentially plane plate (22).

13. Parking brake lever unit according to one of the claims 11 or 12, wherein the plate (22) comprises metallic mounting inserts (24).

14. Parking brake lever unit according to one of the claims 1 - 13, wherein the support (20) comprises an integrated latching element (21) for the mounting of the parking brake lever unit (1) at the vehicle.

15. Parking brake lever unit according to one of the claims 1 - 14, wherein the support (20) comprises an electrical switch (80), which can be actuated by the parking brake lever (10).

## Patentansprüche

1. Handbremshebeleinheit (1) zur Verwendung in einem Kraftfahrzeug aufweisend:
a. einen Handbremshebel (10) aus einem Kunststoffmaterial;
b. eine Halterung (20) aus einem Kunststoffmaterial, an der der Handbremshebel (10) schwenkbar gelagert ist;
c. eine Sperreinrichtung (40, 26), umfassend eine an dem Handbremshebel (10) befestigten Klinke (40) und einen Sperrzahneinsatz (26); wobei
d. der Sperrzahneinsatz (26) aus einem Metall besteht und in die Halterung (20) eingespritzt ist.

2. Handbremshebeleinheit gemäß Anspruch 1, wobei der Sperrzahneinsatz (26) Sperrzähne (27) aufweist und der Sperrzahneinsatz (26) so in die Halterung (20) integriert ist, dass im Wesentlichen nur die Sperrzähne (27) freiliegen.

3. Handbremshebeleinheit gemäß einem der Ansprüche 1 oder 2, wobei der Sperrzahneinsatz (26) Verankerungslöcher (28) aufweist, die beim Spritzgießen der Halterung (20) mit Kunststoffmaterial gefüllt werden.

4. Handbremshebeleinheit gemäß einem der Ansprüche 1 - 3, wobei die Klinke (40) aus einem Metall oder einem Kunststoffmaterial besteht.

5. Handbremshebeleinheit gemäß einem der Ansprüche 1 - 4, wobei der Handbremshebel (10) mittels einer Achse (70) in der Halterung (20) schwenkbar gelagert ist, wobei die Achse (70) aus einem Kunststoffmaterial besteht.

6. Handbremshebeleinheit gemäß Anspruch 5, wobei die Achse (70) eine selbstverriegelnde Achse ist, die integrierte Verriegelungselemente aufweist, so dass sie ohne zusätzliche Montageelemente in der Halterung (20) befestigt wird.

7. Handbremshebeleinheit gemäß einem der Ansprüche 1 - 6, wobei der Handbremshebel (10) in seinem Griffbereich (12) einen angespritzten Griff aus einem Kunststoffmaterial aufweist.

8. Handbremshebeleinheit gemäß einem der Ansprüche 1 - 7, wobei der Handbremshebel (10) und/oder die Halterung (20) und/oder die Achse (70) aus einem technischen Kunststoff besteht/bestehen, welcher selbstschmierende Eigenschaften aufweist, so dass keine zusätzlichen Schmierstoffe oder spezielle Lager oder Lagerschalen eingesetzt werden müssen.

9. Handbremshebeleinheit gemäß Anspruch 8, wobei das Kunststoffmaterial Additive zur Erzielung der selbstschmierenden Eigenschaften aufweist.

10. Handbremshebeleinheit gemäß einem der Ansprüche 1 - 7, wobei der Handbremshebel (10) und/oder die Halterung (20) Lagerbuchsen oder Lagerschalen aus einem Metall oder Kunststoffmaterial aufweisen, wobei das Material der Lagerbuchsen oder Lagerschalen selbstschmierende Eigenschaften aufweist.

11. Handbremshebeleinheit gemäß einem der Ansprüche 1 - 10, wobei die Halterung (20) einen steife, an ihrer Unterseite verrippte Platte (22) aufweist.

12. Handbremshebeleinheit gemäß einem der Ansprüche 1 - 11, wobei die Halterung (20) eine im wesentlichen ebene Platte (22) aufweist.

13. Handbremshebeleinheit gemäß einem der Ansprüche 11 oder 12, wobei die Platte (22) metallische Montageinsätze (24) aufweist.

14. Handbremshebeleinheit gemäß einem der Ansprüche 1 - 13, wobei die Halterung (20) ein integriertes Rastelement (21) zur Montage der Handbremshebeleinheit (1) am Fahrzeug aufweist.

15. Handbremshebeleinheit gemäß einem der Ansprüche 1 - 14, wobei die Halterung (20) einen elektrischen Schalter (80) aufweist, der von dem Handbremshebel (10) betätigbar ist.

## Revendications

1. Unité de levier de frein à main (1) destinée à être utilisée dans un véhicule à moteur, comprenant:
a. un levier de frein à main (10) en matière plastique ;
b. un support (20) en matière plastique, au niveau duquel le levier de frein à main (10) est supporté de manière pivotante ;
c. une unité de blocage (40, 26) comprenant un cliquet (40), qui est monté au niveau du levier de frein à main (10), et un insert d'encliquetage (26) ; dans laquelle :
d. l'insert d'encliquetage (26) est composé par un métal, et est surmoulé à l'intérieur du support (20).

2. Unité de levier de frein à main selon la revendication 1, dans laquelle l'insert d'encliquetage (26) comprend des dents de blocage (27) et dans laquelle l'insert d'encliquetage (26) est intégré dans le support (20), de sorte que sensiblement seules les dents de blocage (27) sont exposées.

3. Unité de levier de frein à main selon l'une des revendications 1 ou 2, dans laquelle l'insert d'encliquetage (26) comprend des trous de montage (28), qui sont remplis avec une matière plastique pendant le moulage par injection du support (20).

4. Unité de levier de frein à main selon l'une des revendications 1 à 3, dans laquelle le cliquet (40) est composé d'un métal ou d'une matière plastique.

5. Unité de levier de frein à main selon l'une des revendications 1 à 4, dans laquelle le levier de frein à main (10) est supporté de manière pivotante au moyen d'un arbre (70) à l'intérieur du support (20), dans laquelle l'arbre (70) est composé d'une matière plastique.

6. Unité de levier de frein à main selon la revendication 5, dans laquelle l'arbre (70) est un arbre autobloquant, qui comprend des éléments de verrouillage intégrés, de sorte qu'il peut être monté à l'intérieur du support (20) sans élément de montage supplémentaire.

7. Unité de levier de frein à main selon l'une des revendications 1 à 6, dans laquelle le levier de frein à main (10) comprend une poignée surmoulée au niveau de sa zone de préhension (12) en matière plastique.

8. Unité de levier de frein à main selon l'une des revendications 1 à 7, dans laquelle le levier de frein à main (10) et/ou le support (20) et/ou l'arbre (70) se composent d'une matière plastique technique, qui comprend des caractéristiques autolubrifiantes, de sorte qu'aucun lubrifiant ou paliers spéciaux ou moitiés de palier supplémentaires ne doit être utilisé.

9. Unité de levier de frein à main selon la revendication 8, dans laquelle la matière plastique comprend des additifs pour obtenir les caractéristiques autolubrifiantes.

10. Unité de levier de frein à main selon l'une des revendications 1 à 7, dans laquelle le levier de frein à main (10) et/ou le support (20) comprennent des coussinets de palier ou des moitiés de palier en métal ou en matière plastique, dans laquelle le matériau des coussinets de palier ou des moitiés de palier comprend des caractéristiques autolubrifiantes.

11. Unité de levier de frein à main selon l'une des revendications 1 à 10, dans laquelle le support (20) comprend une plaque rigide (22) qui est défoncée au niveau de sa face inférieure.

12. Unité de levier de frein à main selon l'une des revendications 1 à 11, dans laquelle le support (20) comprend une plaque (22) essentiellement plane.

13. Unité de levier de frein à main selon l'une des revendications 11 ou 12, dans laquelle la plaque (22) comprend des inserts de montage (24) métalliques.

14. Unité de levier de frein à main selon l'une des revendications 1 à 13, dans laquelle le support (20) comprend un élément de verrouillage intégré (21) pour le montage de l'unité de levier de frein à main (1) sur le véhicule.

15. Unité de levier de frein à main selon l'une des revendications 1 à 14, dans laquelle le support (20) comprend un interrupteur électrique (80), qui peut être actionné par le levier de frein à main (10).
